# FASCICULE DE BREVET EUROPEEN

(11) **EP 2 155 025 B1**
(45) Date de publication et mention de la délivrance du brevet: **06.10.2010**
(21) Numéro de dépôt: 08760001.1
(22) Date de dépôt: 26.05.2008
(51) Int. Cl.: A47J 36/02, A47J 36/06, B65D 81/34

(54) **COUVERCLE AMOVIBLE POUR LA CUISSON OU LE RECHAUFFAGE D'ALIMENTS DANS UN FOUR A MICRO-ONDES**
ABNEHMBARER DECKEL ZUM KOCHEN ODER ERHITZEN VON NAHRUNGSMITTELN IN EINEM MIKROWELLENHERD
REMOVABLE LID FOR COOKING OR HEATING FOOD IN A MICROWAVE OVEN

(30) Priorité: 01.06.2007 FR 0755417
(43) Date de publication de la demande: 24.02.2010
(73) Titulaire: Pralus, Georges, 42720 Briennon (FR)
(72) Inventeur: Pralus, Georges, 42720 Briennon (FR)
(74) Mandataire: Colombo, Michel
(86) Numéro de dépôt international: PCT/EP2008/056402
(87) Numéro de publication internationale: WO 2008/145624

(56) Documents cités:
- EP-A- 0 334 772
- EP-A- 1 234 534
- EP-A- 1 464 262
- US-A- 5 132 151
- US-A1- 2002 041 920
- US-A1- 2004 251 257

## Description

La présente invention concerne le domaine technique des ustensiles ou accessoires utilisés pour la cuisson ou le réchauffage d'aliments dans un four à micro-ondes.

Un brevet EP 0334772 a proposé, pour assurer la cuisson ou le réchauffage d'aliments dans un four à micro-ondes, de mettre en oeuvre une cloche amovible qui possède une paroi externe perméable aux micro-ondes et étanche à l'air ainsi qu'à la vapeur d'eau, une paroi interne perforée et enfin une nappe intercalaire réalisée en matière poreuse rétentrice d'eau et placée entre les parois interne et externe. La cloche amovible est destinée, après humidification de la nappe intercalaire, à être placée sur un plat ou une assiette contenant les aliments à chauffer de manière à définir une enceinte de chauffage. Ainsi, lors du fonctionnement du four, les micro-ondes chauffent l'eau contenue dans la nappe intercalaire qui se vaporise et diffuse par les perforations de la paroi interne dans l'enceinte de chauffage contribuant au chauffage des aliments et évitant leur dessèchement.

Une telle cloche amovible donne généralement satisfaction et permet dans la plupart des cas d'assurer une cuisson ou un chauffage des aliments aux micro-ondes sans perte d'humidité et dessèchement de ces derniers. Cependant, il est apparu que dans certaines configurations d'utilisation et notamment dans le cas du chauffage d'aliments nécessitant des durées d'application des micro-ondes plus longues que la moyenne, la cloche selon l'art antérieur n'est pas toujours en mesure de garantir la présence de vapeur tout au long du chauffage.

Il est donc apparu le besoin d'un nouveau type de couvercle amovible pour la formation d'une enceinte de chauffage au sein d'un four à micro-ondes qui soit en mesure de garantir la présence de vapeur pendant la durée complète du chauffage ou tout au moins pendant la majeure partie de ce dernier et, en tout état de cause, pendant une durée supérieure à celle obtenue avec une cloche selon l'art antérieur.

Afin d'atteindre cet objectif, l'invention concerne un couvercle amovible pour la formation d'une enceinte de cuisson ou de réchauffage d'aliments au sein d'un four à micro-ondes, comprenant:
■ une paroi externe perméable aux micro-ondes et étanche à l'air ainsi qu'à la vapeur d'eau,
■ une paroi interne perméable aux micro-ondes et adaptée pour laisser passer l'air et la vapeur d'eau,
■ et une nappe intercalaire réalisée en une matière poreuse rétentrice d'eau et placée entre les parois interne et externe.
Selon l'invention, le couvercle est **caractérisé en ce que** :
■ la paroi externe possède au niveau de sa face interne orientée vers la paroi interne au moins une conformation convexe destinée à définir une zone froide de condensation,
■ la paroi interne est ouverte en regard de chaque conformation convexe de manière à laisser apparaître au moins la partie de la nappe intercalaire enveloppant la conformation convexe.

De manière fort avantageuse, l'ouverture de la paroi interne en regard de chaque conformation convexe permet à une partie de la vapeur d'eau présente à l'intérieur de l'enceinte de venir se condenser sur la surface interne de chaque conformation convexe de la paroi externe. L'eau liquide ainsi formée réhumidifie la nappe intercalaire et se diffuse par capillarité à l'intérieur de cette dernière pour ensuite être vaporisée à nouveau. Cette régénération permet au couvercle selon l'invention de maintenir une présence de vapeur à l'intérieur de l'enceinte qu'il définit pendant toute la durée de l'application des micro-ondes.

Selon une caractéristique de l'invention visant à faciliter la manipulation du couvercle, la paroi externe possède au niveau de sa face interne au moins une ou deux conformations convexes qui définissent au niveau de la face externe des conformations concaves adaptées pour une préhension du couvercle au moyen des doigts.

Selon l'invention, l'ouverture de la paroi interne au niveau des conformations convexes peut être réalisée de toutes façons appropriées. Selon une forme de réalisation de l'invention, la paroi interne possède au moins une fenêtre en regard d'une ou plusieurs conformations convexes de la paroi externe.

Selon l'invention, la paroi interne peut être réalisée de toute manière appropriée dans la mesure où elle assure la diffusion de la vapeur d'eau et des micro-ondes à l'intérieur de l'enceinte de cuisson ou de réchauffage. Selon une forme préférée mais non strictement nécessaire de réalisation de l'invention, la paroi interne est réalisée dans un matériau perméable aux micro-ondes et étanche à l'air et à la vapeur d'eau, et possède une série de perforations destinées à laisser passer l'air et la vapeur d'eau.

Dans le cas de cette forme préférée de réalisation et selon une caractéristique de l'invention, la paroi interne du couvercle amovible possède une partie supérieure ou de dessus bordée par un bord périphérique, les perforations destinées à laisser passer l'air et la vapeur d'eau étant réalisées dans le bord périphérique tandis que la partie supérieure est pleine ou fermée sauf au niveau de chaque fenêtre en regard d'au moins une conformation convexe de la paroi externe. Cette caractéristique garantit une parfaite répartition de la vapeur au sein de l'enceinte de chauffage par une diffusion périphérique.

Selon une autre caractéristique de l'invention visant à optimiser les performances de la réhumidification, la ou les conformations convexes sont situées dans une région supérieure du couvercle.

Selon encore une autre caractéristique de l'invention, la paroi interne est fixée de manière amovible à la paroi externe. Cette caractéristique avantageuse autorise un meilleur accès à la nappe intercalaire afin d'assurer son humidification initiale ou son nettoyage.

Selon encore une autre caractéristique de l'invention, la nappe intercalaire possède des propriétés antibactériennes et antifongiques, permettant notamment de prévenir la prolifération des bactéries et l'apparition de moisissures au niveau de la nappe intercalaire.

Le couvercle selon l'invention peut être mis en oeuvre de différentes manières. Ainsi, selon une variante de réalisation, le couvercle amovible comprend des moyens d'adaptation sur un récipient pour définir avec ce dernier l'enceinte de cuisson ou de réchauffage d'aliments au sein d'un four à micro-ondes.

Dans le même sens et selon une autre variante de réalisation, le couvercle amovible selon l'invention, possède une conformation en cloche adaptée pour définir avec un support, tel qu'une assiette ou un plateau de four à micro-ondes, l'enceinte de cuisson ou de réchauffage d'aliments au sein d'un four à micro-ondes.

Bien entendu, les différentes caractéristiques de l'invention évoquées ci-dessus peuvent être mises en oeuvre les unes avec les autres selon différentes combinaisons lorsqu'elles ne sont pas incompatibles ou exclusives les unes des autres.

Par ailleurs, diverses autres caractéristiques de l'invention ressortent de la description faite ci-dessous en référence aux dessins annexés qui montrent, à titre d'exemples non limitatifs, des formes de réalisation de l'objet de l'invention.

La **fig. 1** est une perspective partiellement arrachée d'un couvercle amovible selon l'invention, réalisé sous la forme d'une cloche destinée à être posée sur un support.

La **fig. 2** est une perspective éclatée montrant les différents éléments constitutifs du couvercle amovible illustré à la **fig. 1****.**

La **fig. 3** est une perspective partiellement arrachée analogue à la **fig. 1** montrant une autre variante de réalisation dans laquelle le couvercle amovible selon l'invention est destiné à être adapté sur un récipient.

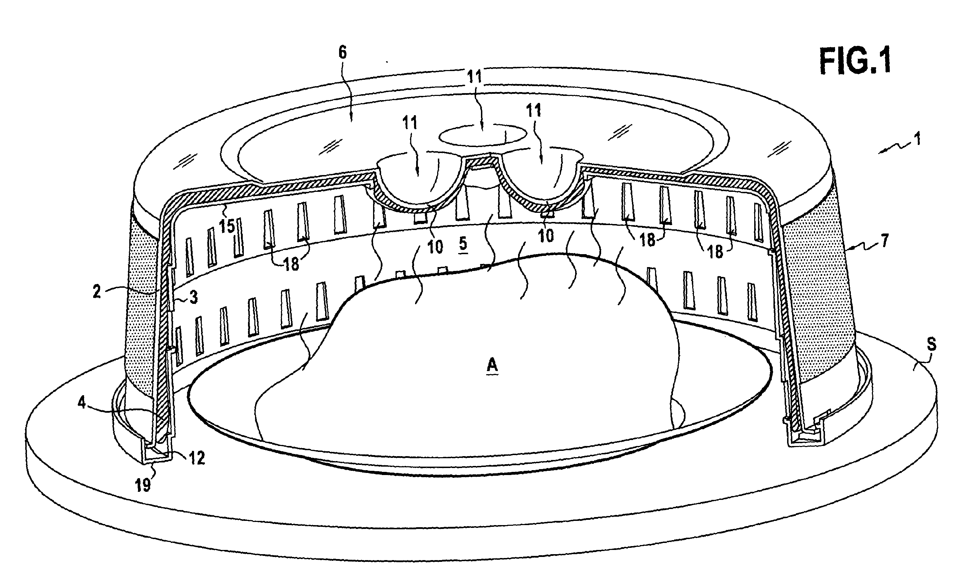

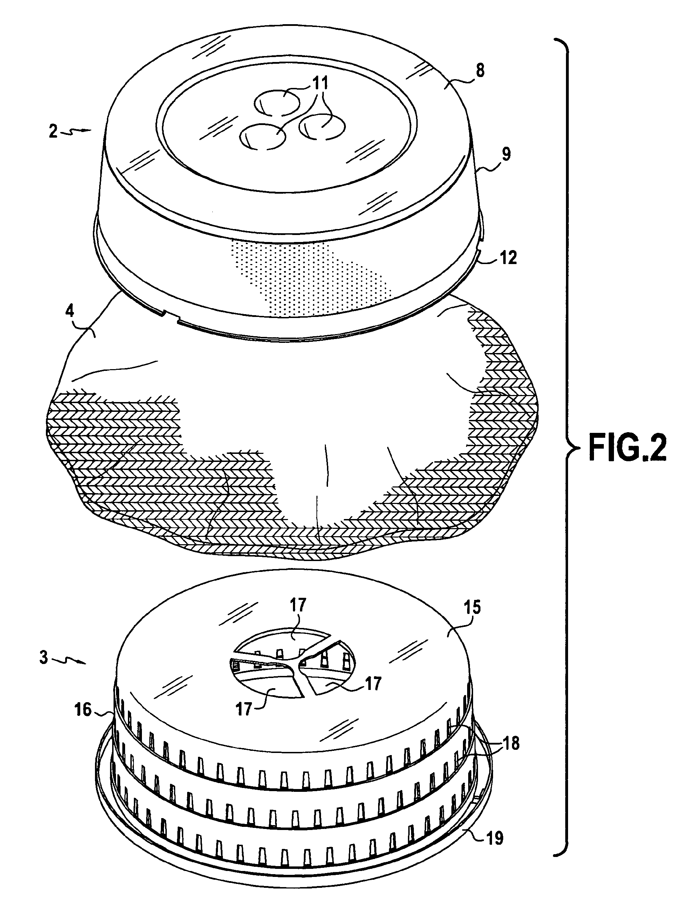

Un couvercle amovible selon l'invention, désigné dans son ensemble par la référence **1,** comprend, comme le montrent les **fig. 1** et **2****,** une paroi externe **2,** une paroi interne **3** et une nappe intercalaire **4** interposée entre les parois interne **3** et externe **2.**

Selon l'exemple illustré, le couvercle amovible **1** est réalisé sous la forme d'une cloche destinée à définir une enceinte de chauffage ou de confinement **5** lorsqu'elle est en appui sur un support **S** tel que, par exemple, le plateau d'un four à micro ondes comme le montre la **fig. 1****.** Le couvercle amovible **1** présente alors un dessus **6,** sensiblement plat, bordé par un bord périphérique **7** de forme légèrement tronconique.

Une telle conformation se retrouve pour la paroi externe **2** qui présente donc un dessus **8,** sensiblement plat, bordé par un bord périphérique **9** de forme légèrement tronconique convergeant vers le dessus **8.** Conformément à une caractéristique essentielle de l'invention, la paroi externe comprend sur sa face interne au moins une et, selon l'exemple illustré, trois conformations convexes **10** s'étendant vers l'intérieur de l'enceinte de confinement **5.** Toujours selon l'exemple illustré, ces conformations convexes sont aménagées au niveau du dessus **8** et définissent au niveau de la face externe de la paroi interne **2** trois conformations concaves **11** disposées à **120°** les unes des autres et adaptées pour permettre une préhension du couvercle amovible **1** au moyen de trois doigts. Le bord périphérique **9** de la paroi externe **2** comprend en outre à l'opposé du dessus **8** un rebord **12** d'assemblage avec la paroi interne **3.** La paroi externe **2** est réalisée en un matériau perméable ou transparent aux micro-ondes et étanche à l'air et à la vapeur d'eau tel que, par exemple, une matière plastique translucide comme du polyéthylène ou du polypropylène.

La conformation en cloche du couvercle amovible **1** se retrouve également pour la paroi interne **3** qui comprend un dessus **15** sensiblement plat bordé aussi par un bord périphérique **16** de forme générale tronconique convergeant vers le dessus **15.** Conformément à une caractéristique essentielle de l'invention, la paroi interne **3** est ouverte en regard des conformations convexes **10** et comprend, selon l'exemple illustré, trois fenêtres **17** destinées à se trouver en regard des conformations convexes **10.** Selon l'exemple illustré, en dehors des fenêtres **17,** le dessus **15** de la paroi interne **3** est plein et ne dispose d'aucune autre ouverture. La paroi externe **3** est, de préférence, réalisée dans un matériau perméable ou transparent aux micro-ondes et étanche à l'air et à la vapeur d'eau, de même nature que le matériau constitutif de la paroi externe **2.** Afin de permettre la diffusion de vapeur comme cela apparaîtra par la suite, le bord périphérique **16** de la paroi interne **3** possède une série de perforations **18** réparties irrégulièrement sur tout son pourtour. Le bord périphérique **16** de la paroi interne **3** comprend également à l'opposé du dessus **15** un rebord périphérique **19** d'assemblage avec la paroi externe **2.**

Les parois interne **3** et externe **2** sont adaptées pour ménager un espace de réception de la nappe intercalaire **4** lorsqu'elles sont assemblées. La nappe intercalaire **4** occupe alors la majeure partie de cet espace en recouvrant les conformations convexes **10,** la face interne de la nappe intercalaire **4** étant alors dégagée compte tenu de l'existence des fenêtres **17.** La nappe intercalaire **4** peut être réalisée en tout matériau adapté présentant une capacité de rétention d'eau et une porosité suffisante pour permettre sous l'action de micro-ondes une diffusion de vapeur à partir d'une quantité d'eau retenue par la nappe intercalaire **4.** A titre d'exemple de matériau poreux constitutif de la nappe intercalaire, on peut citer les mousses, les matériaux fibreux, du type papier, les textiles, notamment tels que les tissus, tricots ou non tissés. Dans une forme préférée de réalisation, la nappe intercalaire **4** est réalisée dans un matériau fibreux contenant des fibres cellulosiques ou exclusivement en fibres cellulosiques, ces fibres cellulosiques pouvant être choisies parmi, par exemple, les fibres de viscose, lyocell ou coton. Un tel matériau en fibres cellulosiques présente notamment une capillarité nécessaire pour permettre d'emmagasiner une quantité d'eau suffisante qui va ensuite être diffusée sous l'action du chauffage. Afin d'éviter toute prolifération de bactéries en dehors des périodes d'utilisation du couvercle amovible **1,** la nappe intercalaire **4** possède, dans une forme préférée de réalisation, des propriétés bactériennes et antifongiques. Bien entendu, la nappe intercalaire sera choisie de manière à être ininflammable aux micro-ondes, et de façon avantageuse, lavable à des températures de l'ordre de 75°C.

Le couvercle amovible **1** ainsi constitué est mis en oeuvre de la manière suivante.

Tout d'abord, la nappe intercalaire **4** est humectée en versant par exemple de l'eau au niveau de sa partie accessible par les fenêtres **17** de la paroi interne. La porosité de la nappe intercalaire **4** permet alors à l'eau de diffuser à l'intérieur de la nappe. Ensuite, le couvercle amovible **1** est placé à l'intérieur du four à micro-ondes non représenté de manière à englober les aliments à réchauffer qui se trouvent alors enfermés dans l'enceinte de cuisson ou de réchauffage **5** comme le montre la **fig. 1****.**

Sous l'effet des micro-ondes, l'eau contenue dans la paroi intercalaire **4** se vaporise et diffuse à l'intérieur de l'enceinte **5** par les perforations **18** de la paroi interne **3.** Lorsque l'atmosphère de l'enceinte **5** est saturée en vapeur d'eau, cette dernière se condense naturellement au niveau des zones froides définies par les conformations convexes **10,** ce qui contribue à réhumecter la paroi intercalaire **4** et évite à l'excédent de vapeur de s'échapper en dehors de l'enceinte **5.** L'eau récupérée au niveau des conformations convexes **10** diffuse par capillarité à l'intérieur de la paroi intercalaire **4** pour ensuite être vaporisée à nouveau et se diffuser dans l'enceinte **5** par les perforations **18.** Ainsi, la présence des conformations convexes **10** permet d'assurer, d'une part, une régulation du niveau de vapeur d'eau dans l'enceinte **5** et, d'autre part, un recyclage de l'eau de manière à maintenir humide la nappe intercalaire **4,** de sorte qu'il est entretenu une atmosphère humide dans l'enceinte **5** pendant toute la durée de l'application des micro-ondes.

Selon l'exemple illustré, la paroi interne **3** est fixée de manière amovible sur la paroi externe **2,** de manière à permettre un nettoyage aisé de la nappe intercalaire **4** après utilisation. Toutefois, il pourrait être envisagé que les parois interne **3** et externe **2** soient liées l'une à l'autre de façon permanente de manière à éviter ou interdire tout démontage.

Selon l'exemple décrit précédemment et illustré aux **fig. 1** et **2****,** le couvercle amovible **1** selon l'invention présente une forme de cloche adaptée pour définir avec une assiette ou un plateau de four l'enceinte de cuisson ou de réchauffage **5.** Toutefois, selon l'invention, le couvercle amovible **1** pourrait être réalisé d'une toute autre façon.

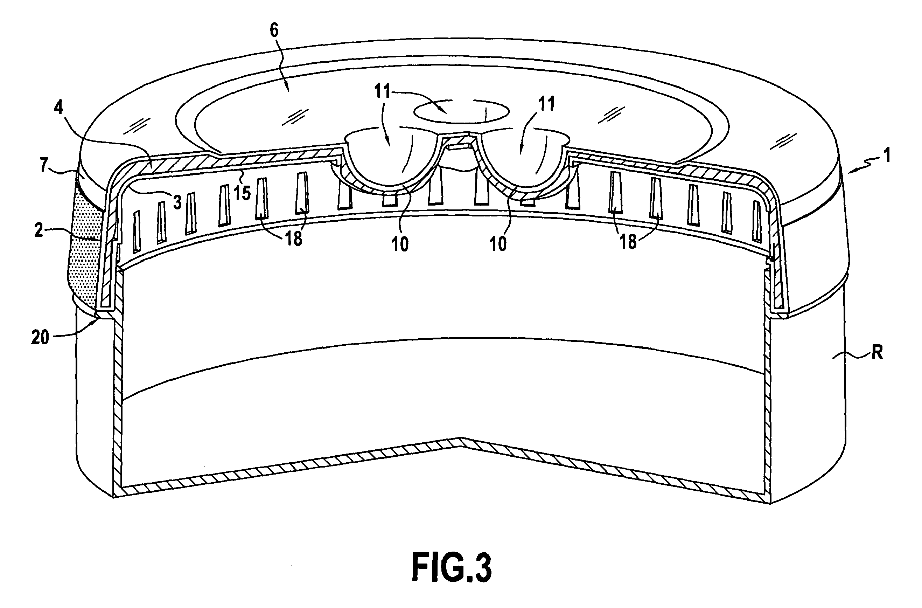

Ainsi, selon l'exemple illustré à la **fig. 3****,** le couvercle amovible **1** est conçu pour être adapté sur un récipient **R** de manière à définir avec ce dernier l'enceinte **5** de cuisson ou de réchauffage des aliments contenus dans le récipient **R.** A cet effet, la partie inférieure du bord périphérique **7** définit un moyen d'adaptation **20** sur le récipient **R.**

La description qui suit permet de détailler les formes de réalisation mettant en oeuvre une nappe intercalaire présentant des propriétés antibactériennes et antifongiques. Une telle nappe pourrait également être mise en oeuvre dans les cloches de l'art antérieur, notamment décrites dans brevet EP 0334772. Ces propriétés antibactériennes et antifongiques peuvent être obtenues par traitement du matériau poreux avec une composition antibactérienne et antifongique. L'utilisation de fibres antibactériennes et antifongiques qui intègrent au sein des fibres des agents antibactériens et antifongiques, bien que non préférée, peut également être prévue. Dans le cas où le matériau poreux est un textile, le traitement peut être réalisé sur les fibres avant la réalisation du textile, ou de préférence, sur le textile fini.

La composition antibactérienne et antifongique peut être composée d'un liant polymérique dans lequel un agent antibactérien et antifongique est dispersé. La quantité d'agent antibactérien et antifongique est choisi de manière à obtenir l'effet antibactérien et antifongique souhaité. Le liant et l'agent antibactérien et antifongique sont choisis pour être compatibles avec les applications alimentaires. A titre d'exemple, le liant est choisi parmi les acrylates, polyuréthanes, urée formol, polyvinylacétates et leurs mélanges. L'agent antibactérien et antifongique pourra, quant à lui, être un agent organique, par exemple, choisi parmi les ammonium quaternaires ou un agent inorganique choisi parmi les sels d'argent ou de zinc, les zéolites à base d'argent ou de zinc, la silice, les céramiques ou la poudre de verre contenant de l'argent ou du zinc. L'agent antibactérien et antifongique peut se trouver sous la forme de particules dispersées dans le liant ou être directement solubilisés dans ce dernier. De façon avantageuse, l'agent antibactérien et antifongique est sélectionné pour résister aux lavages ménagers, à des températures de l'ordre de 75°C.

Les agents antibactériens et antifongiques ci-dessous pourront être utilisés dans le cadre de l'invention :
- Alphasan sel d'argent adsorbé sur phosphate de zirconium de la Société Milliken
- Zéolite A à l'argent de la Société Sinanen Company
- Zéolite d'argent et de zinc de la Société Ciba Specialty Chemicals
- Poudre de verre contenant de l'argent, du magnesium et du calcium de la Société Ihsizuka Glass Co, Ltd.

A titre préféré, le traitement antibactérien et antifongique ou les fibres antibactériennes et antifongiques seront sélectionnées de manière à présenter une couleur blanche ou écrue. A titre d'exemple de traitement particulièrement avantageux, on peut citer la formulation bicomposante Ultra Fresh Silpure FBR-5 (Thomson Research Associates) composée d'un sel d'argent (Silpure A) et d'un acrylate agréé par la FDA pour un contact alimentaire (Silpure B). Le traitement AEM 5772 (Aegis Microbe Shield) fourni par la société Devan Chemicals NV (Renaix, Belgique) est également un traitement parfaitement adapté à invention. Le traitement AEM 5772 comprend un triméthylsilane porteur d'une fonction ammonium quaternaire avec une chaîne en C₁₈ et un liant Nanolink de type polyamine se comportant comme un activateur des sites réactifs.

Les trois exemples ci-après sont des exemples de matériaux poreux pouvant être utilisés pour la constitution de la nappe intercalaire dans le cadre de l'invention.

### Exemple 1

Une éprouvette de nontissé cellulosique (70 % en masse de fibres de viscose, 30 % en masse de fibres de polyester, 50 g/m2 produit par Jacob Holm) de 14 g est plongée dans le mélange :
- 0,22 g Silpure A
- 2,57 g de Silpure B
- 45,16 g d'eau douce

Après lavage et essorage, l'éprouvette de nontissé est imprégnée d'une masse de liquide correspondant à 150% de sa masse avant trempage.

Les pourcentages en masse sur le nontissé imprégné sont donc de :
0,69 % en masse de Silpure A
7,79 % en masse de Silpure B

L'éprouvette de nontissé est séchée sous ventilation à la température ambiante puis chauffée (pour la polymérisation du Silpure B) à 150°C pendant 55 secondes dans une étuve.

### Test microbiologique sur éprouvette non lavée selon la norme ISO/DIS 20743

Δ = -4,75 (0 UFC sont dénombrés sur l'éprouvette après 24 heures)
Grâce au traitement contenant de l'argent, les bactéries de l'éprouvette ont été détruites en 24 heures. Souche : Staphyloccus aureus

### Test microbiologique selon la norme ISO/DIS 20743

sur éprouvette lavée 5 fois selon NF EN 26 330 à 75°C sans perborate
Δ = 0 (Souche : Staphyloccus aureus)
Grâce au traitement contenant de l'argent, la population bactérienne est maintenue constante sur 24 heures. Les fibres du nontissé lavé 5 fois ont des propriétés bactériostatiques.
Témoin sans traitement
10^{4.74} UFC introduites au temps 0
10^{7.29} UFC retrouvées à 24 heures
Δ = + 2,54

### Test d'absorption d'eau selon la norme ISO 9073-6

Une éprouvette de nontissé de masse M1 est plongée dans de l'eau douce puis égouttée. En fin d'égouttage (30 minutes), la masse de l'éprouvette imprégnée est de M2.
Expression des résultats
Calcul de R en % = 100 x (M2-M1)/M1 %
= 100 x masse d'eau retenue/masse de l'éprouvette sèche %
Pour l'éprouvette traitée, non lavée : R = 700 %
Pour l'éprouvette témoin sans traitement : R = 870 %
Pour l'éprouvette traitée puis lavée 5 fois selon NF EN 26 330 à 75°C sans perborate : R = 800 %

### Exemple 2

Une éprouvette de nontissé cellulosique 100 % viscose (produit par Texidel : réf MV 130 Blanc 130 g/m2 de) de 80 g est traitée par le mélange :
- 1,40 g de Silpure A
- 13,37 g de Silpure B
- 203,4 g d'eau douce

Les éprouvettes sont découpées en sous-éprouvettes de 20 g et séchées et chauffées pendant 1 minute 45 secondes à 160°C à la vaporiseuse de laboratoire Mathis réf. DHE 58797 (sans vapeur, débit air chaud : 90 %).

### Test d'absorption selon la norme ISO 9073-6 décrit précédemment

Pour l'éprouvette traitée (lavée ou non) : R = 720 %
Pour l'éprouvette témoin : R = 680 %

### Exemple 3

Une éprouvette de nontissé cellulosique 100 % viscose (produit par Texidel : réf MV 130 Blanc 130 g/m2 de) de 80 g est traitée par le mélange :
- 40 g Silane AEM 5772/5 Aegis Microbe Shield
- 20 g AEM Nanolink (Devan additive)
- 940 g d'eau douce

Après trempage, l'éprouvette de nontissé est imprégnée d'une masse de liquide correspondant à 74 % de sa masse avant trempage.

Les pourcentages en masse sur le nontissé imprégné sont donc de :
2,96 % en Silane
1,48 % en Nanolink

Un séchage est réalisé à 130°C en étuve ventilée pendant 3 minutes.

Test microbiologique selon la norme ISO/DIS 20743
- sur éprouvette non lavée
   Δ = - 1,68 : grâce au traitement, la population bactérienne a été réduite de 1,68 log sur 24 heures. Les fibres du nontissé ont des propriétés bactériostatiques.
- sur éprouvette lavée 5 fois à 60°C sans perborate

Δ = 0 : La population bactérienne est constante sur 24 heures.

Les fibres du nontissé lavé 5 fois ont des propriétés bactériostatiques.
Souche : Staphyloccus aureus

### Test d'absorption selon la norme ISO 9073-6 décrit précédemment

Pour l'éprouvette traitée, non lavée : R = 550 %
Pour l'éprouvette traitée lavée 5 fois selon NF EN 26 330 à 75°C sans perborate : R = 680 %
Pour l'éprouvette témoin sans traitement : R = 680 %

Bien entendu, diverses modifications peuvent être apportées au couvercle mobile selon l'invention dans le cadre des revendications.

## Revendications

1. Couvercle amovible pour la formation d'une enceinte **(5)** de cuisson ou de réchauffage d'aliments au sein d'un four à micro-ondes, comprenant :
■ une paroi externe **(2)** perméable aux micro-ondes et étanche à l'air ainsi qu'à la vapeur d'eau,
■ une paroi interne **(3)** perméable aux micro-ondes et adaptée pour laisser passer l'air et la vapeur d'eau,
■ et une nappe intercalaire **(4)** réalisée en une matière poreuse rétentrice d'eau et placée entre les parois interne et externe,
**caractérisé en ce que** :
■ la paroi externe **(2)** possède au niveau de sa face interne orientée vers la paroi interne **(3)** au moins une conformation convexe **(10)** destinée à définir une zone froide de condensation,
■ la paroi interne **(3)** est ouverte en regard de chaque conformation convexe de manière à laisser apparaître au moins la partie de la nappe intercalaire **(4)** enveloppant la conformation convexe **(10).**

2. Couvercle amovible selon la revendication **1, caractérisé en ce que** la paroi externe possède au niveau de sa face interne au moins une ou deux conformations convexes **(10)** qui définissent au niveau de la face externe des conformations concaves **(11)** adaptées pour une préhension du couvercle au moyen des doigts.

3. Couvercle amovible selon la revendication **1** ou **2, caractérisé en ce que** la paroi interne **(3)** possède au moins une fenêtre **(17)** en regard d'une ou plusieurs conformations convexes **(10)** de la paroi externe **(2).**

4. Couvercle amovible selon l'une des revendications **1** à **3, caractérisé en ce que** la paroi interne **(3)** est réalisée dans un matériau perméable au micro-ondes et étanche à l'air et à la vapeur d'eau, et possède une série de perforations **(18)** destinées à laisser passer l'air et la vapeur d'eau.

5. Couvercle amovible selon les revendications **3** et **4, caractérisé en ce que** la paroi interne **(3)** possède un dessus **(15)** bordé par un bord périphérique, les perforations **(18)** destinées à laisser passer l'air et la vapeur d'eau étant réalisées dans le bord périphérique tandis que le dessus **(15)** est plein ou fermé sauf au niveau de chaque fenêtre **(17)** en regard d'au moins une conformation convexe **(10)** de la paroi externe **(2).**

6. Couvercle amovible selon l'une des revendications **1** à **5, caractérisé en ce que** la ou les conformations convexes **(10)** sont situées dans une région supérieure du couvercle.

7. Couvercle amovible selon l'une des revendications **1** à **6, caractérisé en ce que** la paroi interne **(3)** est fixée de manière amovible à la paroi externe **(2).**

8. Couvercle amovible selon l'une des revendications **1** à **7, caractérisé en ce qu'**il comprend des moyens d'adaptation **(20)** sur un récipient **(R)** pour définir avec ce dernier l'enceinte **(5)** de cuisson ou de réchauffage d'aliments au sein d'un four à micro-ondes.

9. Couvercle amovible selon l'une des revendications **1** à **7, caractérisé en ce qu'**il possède une conformation en cloche adaptée pour définir avec un support **(S)** l'enceinte **(5)** de cuisson ou de réchauffage d'aliments au sein d'un four à micro-ondes.

10. Couvercle amovible selon l'une des revendications 1 à 9, **caractérisé en ce que** la matière poreuse de la nappe intercalaire **(4)** est un matériau fibreux.

11. Couvercle amovible selon la revendication 10, **caractérisé en ce que** le matériau fibreux est à base ou exclusivement constitué de fibres cellulosiques.

12. Couvercle amovible selon l'une des revendications 1 à 11, **caractérisé en ce que** la matière poreuse de la nappe intercalaire **(4)** présente des propriétés antibactériennes et antifongiques.

13. Couvercle amovible selon la revendication 12, **caractérisé en ce que** la matière poreuse est traitée avec une composition antibactérienne et antifongique comprenant un agent antibactérien et antifongique dispersé dans un liant polymérique.

14. Couvercle amovible selon la revendication 13, **caractérisé en ce que** la liant est choisi parmi les acrylates, polyuréthanes, urée formol, polyvinylacétates et leurs mélanges.

15. Couvercle amovible selon les revendications 13 ou 14, **caractérisé en ce que** l'agent antibactérien et antifongique est un agent antibactérien et antifongique organique, par exemple, choisi parmi les ammonium quaternaires ou un agent antibactérien et antifongique inorganique choisi parmi les sels d'argent ou de zinc, les zéolites à base d'argent ou de zinc, la silice, les céramiques ou la poudre de verre contenant de l'argent ou du zinc.

## Claims

1. Removable lid for the formation of an enclosure **(5)** for cooking or heating food within a microwave oven, comprising:
■ an external wall **(2)** pervious to microwaves and airtight as well as steamtight,
■ an internal wall **(3)** pervious to microwaves and adapted to allowing the passage of air and steam,
■ and an intercalary sheet **(4)** made out of a porous, water-retentive material placed between the internal and external walls.
**characterized in that:**
■ the external wall **(2)** has, on its internal face oriented towards the internal wall **(3),** at least one convex conformation **(10)** designed to define a cold condensation area,
■ the internal wall **(3)** is open before each convex conformation so as to expose at least one part of the intercalary sheet **(4)** enveloping the convex conformation **(10).**

2. Removable lid according to claim **1, characterized in that** the external wall, at its internal face, possesses at least one or two convex conformations **(10)** which define concave conformations **(11),** at the external face, that are adapted to a grasping of the lid by means of the fingers.

3. Removable lid according to claim **1** ou **2, characterized in that** the internal wall **(3)** possesses at least one window **(17)** facing one or more convex conformations **(10)** of the external wall **(2).**

4. Removable lid according to one of the claims **1** to **3, characterized in that** the internal wall **(5)** is made out of a material pervious to microwaves and airtight and steamtight and possesses a series of perforations **(18) d**esigned to let air and steam pass through.

5. Removable lid according to claims **3** and **4, characterized in that** the internal wall **(3)** has a top **(15)** bordered by a peripheral edge, the perforations **(18)** designed to let air and steam pass through being made in the peripheral edge while the top **(15)** is solid or closed except at the level of each window **(17)** facing at least one convex conformation **(10)** of the external wall **(2).**

6. Removable lid according to one of the claims **1** to **5, characterized in that** the convex conformation or conformations **(10)** are situated in an upper region of the lid.

7. Removable lid according to one of the claims **1** to **6, characterized in that** the internal wall **(3)** is fixed removably to the external wall **(2).**

8. Removable lid according to one of the claims **1** to **7, characterized in that** it comprises means **(20)** for matching with a recipient **(R)** in order to define, with this recipient, the food cooking or heating enclosure **(5)** within a microwave oven.

9. Removable lid according to one of the claims **1** to **7, characterized in that** it possesses a bell-shaped conformation adapted to defining, with a support **(S),** the food cooking or heating enclosure **(5)** within a microwave oven.

10. Removable lid according to one of the claims 1 to 9, **characterized in that** the porous material of the intercalary sheet **(4)** is a fibrous material.

11. Removable lid according to claim **10, characterized in that** the fibrous material is based on or exclusively constituted by cellulose fibers.

12. Removable lid according to one of the claims **1** to **11, characterized in that** the porous material of the intercalary sheet **(4)** has antibacterial and antifungal properties.

13. Removable lid according to claim 12, **characterized in that** the porous material is treated with an antibacterial and antifungal composition comprising an antibacterial and antifungal agent dispersed in a polymer binder.

14. Removable lid according to claim 13, **characterized in that** the binder is chosen from the acrylates, polyurethanes, formol-urea, polyvinyl acetates and their mixtures.

15. Removable lid according to claims 13 ou 14, **characterized in that** the antibacterial and antifungal agent is an organic antibacterial and antifungal agent, for example chosen from among the quaternary ammonium compounds or an inorganic antibacterial and antifungal agent chosen from among silver or zinc salts, silver-based or zinc-based zeolites, silica, ceramics or glass powder containing silver or zinc.

## Patentansprüche

1. Loser Deckel zur Bildung eines Raums (5) zum Kochen oder Aufwärmen von Nahrungsmitteln in einem Mikrowellenherd, der folgende Teile umfaßt:
. Eine Außenwand (2), die für Mikrowellen durchlässig und dicht gegen Luft sowie Wasserdampf ist,
. Eine Innenwand (3), die für Mikrowellen durchlässig und geeignet ist, die Luft und den Wasserdampf durchzulassen,
. Ein Zwischenvlies (4) aus einem porösen wasserbindenden Material, das zwischen der Innen- und der Außenwand plaziert ist,
**dadurch gekennzeichnet, daß**
. die Außenwand (2) an ihrer zur Innenwand (3) zugewandten Innenseite mindestens eine konvexe Ausformung (10) besitzt, die eine kalte Kondensationszone definieren soll,
. die Innenwand (3) vor jeder konvexen Ausformung offen ist, so daß zumindest der Teil des Zwischenvlieses (4) erscheint, der die konvexe Ausformung (10) umhüllt.

2. Loser Deckel nach Anspruch 1, **dadurch gekennzeichnet, daß** die Außenwand an ihrer Innenseite mindestens eine oder zwei konvexe Ausformungen (10) besitzt, die an der Außenseite konkave Ausformungen (11) definieren, die für das Ergreifen des Deckels mit den Fingern geeignet sind.

3. Loser Deckel nach Anspruch 1 oder 2, **dadurch gekennzeichnet, daß** die Innenwand (3) mindestens eine Fensteröffnung (17) vor einer oder mehreren konvexen Ausformungen (10) der Außenwand (2) besitzt.

4. Loser Deckel nach einem beliebigen der vorstehenden Ansprüche 1 bis 3, **dadurch gekennzeichnet, daß** die Innenwand (3) aus einem für Mikrowellen durchlässigen und gegen Luft und Wasserdampf dichten Material ausgeführt ist und eine Reihe Perforationen (18) besitzt, die die Luft und den Wasserdampf durchlassen sollen.

5. Loser Deckel nach den vorstehenden Ansprüchen 3 und 4, **dadurch gekennzeichnet, daß** die Innenwand (3)eine Oberseite (15) besitzt, die von einem peripheren Rand eingefaßt ist, wobei die Perforationen (18), die die Luft und den Wasserdampf durchlassen sollen, in dem peripheren Rand ausgeführt sind, während die Oberseite (15) massiv oder geschlossen ist außer an jeder Fensteröffnung (17) vor mindestens einer konvexen Ausformung (10) der Außenwand (2).

6. Loser Deckel nach einem beliebigen der vorstehenden Ansprüche 1 bis 5, **dadurch gekennzeichnet, daß** sich die konvexe(n) Ausformung (en) (10) im oberen Bereich des Deckels befindet/en.

7. Loser Deckel nach einem beliebigen der vorstehenden Ansprüche 1 bis 6, **dadurch gekennzeichnet, daß** die Innenwand (3) aus der Außenwand (2) herausnehmbar befestigt ist.

8. Loser Deckel nach einem beliebigen der vorstehenden Ansprüche 1 bis 7, **dadurch gekennzeichnet, daß** er Mittel zur Anpassung (20) auf einen Behälter (R) umfaßt, um mit letzterem den Raum (5) zum Kochen oder Aufwärmen von Nahrungsmitteln in einem Mikrowellenherd zu bilden.

9. Loser Deckel nach einem beliebigen der vorstehenden Ansprüche 1 bis 7, **dadurch gekennzeichnet, daß** er eine Ausformung als Haube besitzt, die geeignet ist, mit einer Stütze (S) den Raum (5) zum Kochen oder Aufwärmen von Nahrungsmitteln in einem Mikrowellenherd zu bilden.

10. Loser Deckel nach einem beliebigen der vorstehenden Ansprüche 1 bis 9, **dadurch gekennzeichnet, daß** das Fasermaterial des Zwischenvlieses (4) ein Fasermaterial ist.

11. Loser Deckel nach Anspruch 10, **dadurch gekennzeichnet, daß** das Fasermaterial auf Zellulosefasern beruht oder ausschließlich daraus besteht.

12. Loser Deckel nach einem beliebigen der vorstehenden Ansprüche 1 bis 11, **dadurch gekennzeichnet, daß** das poröse Material des Zwischenvlieses (4) antibakterielle und pilztötende Eigenschaften besitzt.

13. Loser Deckel nach Anspruch 12, **dadurch gekennzeichnet, daß** das poröse Material mit einer antibakteriellen und pilztötenden Zusammensetzung behandelt ist, die einen antibakteriellen und pilztötenden Stoff enthält, der in einem Polymerbindemittel dispergiert ist.

14. Loser Deckel nach Anspruch 13, **dadurch gekennzeichnet, daß** das Bindemittel unter den Acrylaten, Polyurethanen, Harnstoffen, Formol, Polyvinylacetaten und ihren Mischungen gewählt ist.

15. Loser Deckel nach einem beliebigen der vorstehenden Ansprüche 13 oder 14, **dadurch gekennzeichnet, daß** der antibakterielle und pilztötende Stoff ein organischer antibakterieller und pilztötender Stoff ist, der zum Beispiel unter den quartären Ammoniumverbindungen gewählt wird, oder ein anorganischer antibakterieller und pilztötender Stoff ist, der unter Silbersatz oder Zinksalz, den Zeolithen auf Silber- oder Zinkbasis, Silizium, Keramik oder Glaspulver, gewählt wird, die Silber oder Zink enthalten.
